# EUROPÄISCHE PATENTSCHRIFT

(11) **EP 0 965 773 B1**
(45) Veröffentlichungstag und Bekanntmachung des Hinweises auf die Patenterteilung: **24.04.2002**
(21) Anmeldenummer: 99111046.1
(22) Anmeldetag: 14.06.1999
(51) Int. Cl.: F16H 57/02, F16H 3/14

(54) **Wendegetriebe**
Reversing gearbox
Inverseur

(30) Priorität: 20.06.1998 DE 19827581
(43) Veröffentlichungstag der Anmeldung: 22.12.1999
(73) Patentinhaber: ZF FRIEDRICHSHAFEN Aktiengesellschaft, 88038 Friedrichshafen (DE)
(72) Erfinder: Strehler, Richard, 88085 Langenargen (DE); Bartl, Max, 80993 München (DE)

(56) Entgegenhaltungen:
- AU-A- 5 080 669
- DE-A- 4 041 899
- FR-A- 1 201 556

## Beschreibung

Die Erfindung betrifft ein Wendegetriebe mit einem ersten Eingangszahnrad und einem zweiten, zum ersten Eingangszahnrad koaxialen Eingangszahnrad, wobei eine von einer Schalteinrichtung betätigbare Kupplungseinrichtung vorgesehen ist, durch die jeweils ein Eingangszahnrad des Wendegetriebes mit der Eingangswelle kuppelbar ist.

Derartige Wendegetriebe können als hinlänglich bekannt gelten und sind beispielsweise als Teil eines kombinierten Achswendegetriebes für Schienenfahrzeuge mit Dieselmotorantrieb bekannt. In der Regel ist zwischen Dieselmotor und dem Achswendegetriebe ein Getriebe mit veränderlicher Übersetzung zur Anpassung an verschiedene Fahrgeschwindigkeiten vorgesehen. Da bei Schienenfahrzeugen der volle Übersetzungsbereich dieses Getriebes für beide Fahrtrichtungen benötigt wird, ist ein Wendegetriebe erforderlich, welches für beide Fahrtrichtungen eine annähernd gleiche Übersetzung zwischen An- und Abtrieb aufweist. Außer einer Fahrtrichtungsumkehr muß das Wendegetriebe auch eine Entkoppelung zwischen Antriebsmotor und Achsgetriebe ermöglichen, beispielsweise für einen Abschleppbetrieb mit stehendem Motor.

Es ist ein als Stirngetriebe ausgebildetes Wendegetriebe bekannt, welches ein erstes Eingangszahnrad und ein zweites, zum ersten Eingangszahnrad koaxiales Eingangszahnrad aufweist. Das erste Eingangszahnrad ist in direktem Zahneingriff mit einem zum Achsgetriebe führenden Abtriebsrad. Das zweite Eingangszahnrad, das auf der gleichen Eingangswelle wie das erste Eingangszahnrad gelagert ist, ist über eine Zwischenwelle mit dem Abtriebsrad trieblich verbunden. Zwischen der Eingangswelle und den beiden Eingangszahnrädern ist eine Kupplungseinrichtung zur wahlweisen trieblichen Verbindung des ersten oder des zweiten Eingangszahnrads mit der Eingangswelle vorgesehen. Die Kupplungseinrichtung ist über eine Schaltgabel mit Gleitsteinen und mehrere Wellen und Umlenkhebel betätigbar. Außen am Getriebegehäuse ist ein hydraulisch oder pneumatisch betätigbarer Schaltzylinder mit der Hebelanordnung der Kupplungsanordnung verbunden. Zur Erkennung der aktuellen Schaltstellung sind außerdem mechanische Endschalter vorgesehen, die von der Hebelanordnung betätigt werden.

Bei diesem bekannten Wendegetriebe besteht die Schalteinrichtung aus sehr vielen Bauteilen mit entsprechend hohem Kosten-, Montage- und Justieraufwand. Der Schaltzylinder, die Endschalter sowie die Hebelanordnung sind der Verschmutzung ausgesetzt. Eine im Winterbetrieb auftretende Vereisung dieser Teile der Schalteinrichtung kann zum Funktionsausfall führen. Außerdem wird von diesen Teilen der Schalteinrichtung wertvoller Bauraum in Anspruch genommen.

Weiterhin ist aus der DE-A-4041899 ein Getriebe mit zwei auf einer Welle angeordneten und wahlweise schaltbaren Zahnrädern bekannt, wobei eines der Zahnräder auf einem Lagerstutzen eines Getriebegehäusedeckels gelagert ist. Die Schalteinrichtung ist zwischen den Zahnrädern in üblicher Weise angeordnet.

Die Aufgabe der Erfindung ist, ein Wendegetriebe der eingangs genannten Art mit höherer Zuverlässigkeit, besserer Bauraumausnutzung und weniger Montage- bzw. Kostenaufwand zu schaffen.

Erfindungsgemäß wird diese Aufgabe dadurch gelöst, daß das zweite Eingangszahnrad auf einem Lagerstutzen des Wendegetriebegehäuses gelagert ist, der Lagerstutzen im Bereich der Drehachse einen zentralen, längs ausgerichteten Hohlraum aufweist, die Schalteinrichtung von außen in den Hohlraum des Lagerstutzens hineinragt und ein Rückenteil aufweist, der das Wendegetriebegehäuse nach außen abschließt. Die Schalteinrichtung ist größtenteils innerhalb des Bauraums untergebracht, der ohnehin vom zweiten Eingangszahnrad in Anspruch genommen wird. Die beweglichen Teile der Schalteinrichtung sind innerhalb des Wendegetriebegehäuses untergebracht und damit vor Umwelteinflüssen geschützt. Bei dem erfindungsgemäßen Wendegetriebe ist die Schalteinrichtung dennoch von außen zugänglich.

Wenn das Wendegetriebegehäuse einen Gehäusedeckel aufweist und der Lagerstutzen ein Teil des Gehäusedeckels ist, kann die Montage erleichtert werden.

Eine weiter verbesserte Bauraumausnutzung kann erzielt werden, wenn auch das erste Eingangszahnrad auf einem Lagerstutzen des Wendegetriebegehäuses gelagert ist, der ebenfalls einen zentralen, längs ausgerichteten Hohlraum aufweist, und die Eingangswelle des Wendegetriebes in den Hohlraum dieses Lagerstutzens mündet. In einer vorteilhaften Ausgestaltung der Erfindung weist die Kupplungseinrichtung eine Schaltmuffe mit einer Außenverzahnung auf. Die Eingangszahnräder weisen radial innerhalb der Laufverzahnung eine mit der Außenverzahnung der Schaltmuffe zusammenwirkende Innenverzahnung auf. Die Schaltmuffe ist von der Schalteinrichtung axial betätigbar und greift, je nach axialer Schaltstellung, in eine der Innenverzahnungen der Eingangszahnräder ein. In einer Mittelstellung ist die Kupplungseinrichtung mit keinem der Eingangszahnräder in Eingriff, so daß die Eingangswelle von den Eingangszahnrädern in dieser Neutralstellung trieblich entkoppelt ist.

In bezug auf eine hohe Betriebssicherheit ist es vorteilhaft, wenn jede der axialen Schaltstellungen durch einen Verriegelungsmechanismus verriegelbar ist. Ein Schaltzustand kann dann nur geändert werden, wenn zuvor der Verriegelungsmechanismus entriegelt wird.

Um bei Ausfall der hydraulischen, pneumatischen oder elektrischen Versorgung der Schalteinrichtung die Neutralstellung dennoch schalten zu können, ist bei einer Weiterbildung der Erfindung die Mittel-Schaltstellung (= Neutralstellung) federbelastet, d. h., daß die Kupplungseinrichtung mit dem ersten oder zweiten Eingangszahnrad nur gegen eine Federkraft in Eingriff gebracht werden kann. Die Schalteinrichtung weist eine Notentriegelung für den Verriegelungsmechanismus auf, die im Rückenteil angeordnet und damit von außen betätigbar ist. Wird die Notentriegelung betätigt, wird die Kupplungseinrichtung durch die Federkraft in die Neutralstellung gebracht.

Bei dem erfindungsgemäßen Wendegetriebe lassen sich außerdem an der Schalteinrichtung innerhalb des Wendegetriebegehäuses Sensoren zum berührungslosen Erkennen der Schaltstellung der Kupplungseinrichtung und/oder des Verriegelungsmechanismus vorsehen, welche an dieser Stelle vorteilhaft gegen Umwelteinflüsse geschützt sind. Eine sehr kompakte Bauform läßt sich dadurch erzielen, daß die Kupplungseinrichtung auf der Seite des ersten Eingangszahnrads drehfest, aber axial verschieblich mit der in den Hohlraum des Lagerstutzens mündenden Eingangswelle verbunden ist und auf der anderen Seite drehbar, aber axial fest an eine axial betätigbare Schaltstange der Schalteinrichtung gekoppelt ist.

Die im geschalteten Zustand auf die Kupplungseinrichtung wirkende Axialkraft kann dadurch begrenzt werden, daß im Kraftfluß zur Kupplungseinrichtung eine in axialer Richtung wirkende vorgespannte Feder vorgesehen ist.

Weiterhin ist vorteilhaft, wenn die Anschlüsse für die hydraulisch, pneumatisch oder elektrisch betätigbare Schalteinrichtung in dem von außen zugänglichen Rückenteil der Schalteinrichtung angeordnet sind.

Schließlich läßt sich eine einfache Anpassung für verschiedene Anwendungsfälle dadurch erzielen, daß das Wendegetriebe als separate Baueinheit an einem Achsgetriebegehäuse angeflanscht ist und auf seiner Abtriebswelle ein in das Achsgetriebegehäuse hineinragendes Kegelrad des Achsgetriebes trägt.

Die Erfindung wird anhand der beiliegenden Figuren näher erläutert, wobei
- Fig. 1: eine schematische Darstellung eines Antriebs für ein Schienenfahrzeug mit einem teilweisen Schnitt durch das erfindungsgemäße Wendegetriebe mit einem Achsgetriebe,
- Fig. 2: einen Schnitt durch ein erfindungsgemäßes Wendegetriebe und
- Fig. 3: einen Schnitt durch eine Ausführungsform einer Schalteinrichtung
zeigen.

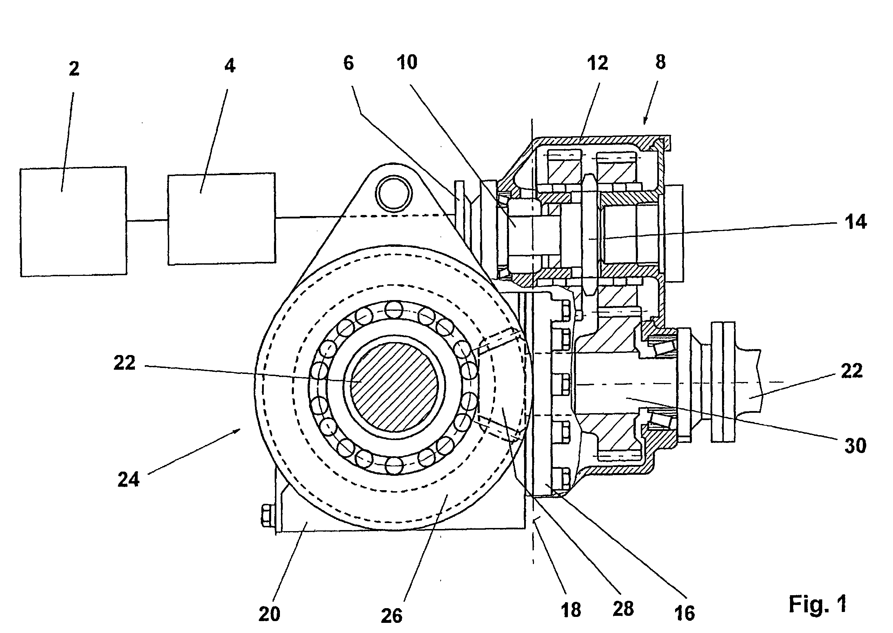

Der in Fig. 1 schematisch dargestellte Antriebsmotor 2 treibt über ein Schaltgetriebe 4 und eine Gelenkwelle 6 ein Wendegetriebe 8 an. Dabei ist die Gelenkwelle 6 mit einer Eingangswelle 10 des Wendegetriebes 8 verbunden, die im Wendegetriebegehäuse 12 drehbar gelagert ist und eine Kupplungseinrichtung 14 trägt.

Das Wendegetriebegehäuse 12 besitzt einen Flansch 16, mit dem es an einer Trennfläche 18 eines Achsgetriebegehäuses 20 angeflanscht ist. Die Trennfläche 18 verläuft in einer senkrechten Trennebene achsparallel zu der Fahrzeugachse 22, die im Achsgetriebegehäuse 20 eines Achsgetriebes 24 gelagert ist und ein Kegelrad 26 trägt. Dieses kämmt mit einem Kegelrad 28, das auf der Abtriebswelle 30 des Wendegetriebes 8 sitzt und über den Flansch 16 hinaus in das Achsgetriebegehäuse 20 hineinragt. Mit dem freien Ende der Abtriebswelle 30 kann über eine weitere Gelenkwelle 22 eine weitere Fahrzeugachse angetrieben werden.

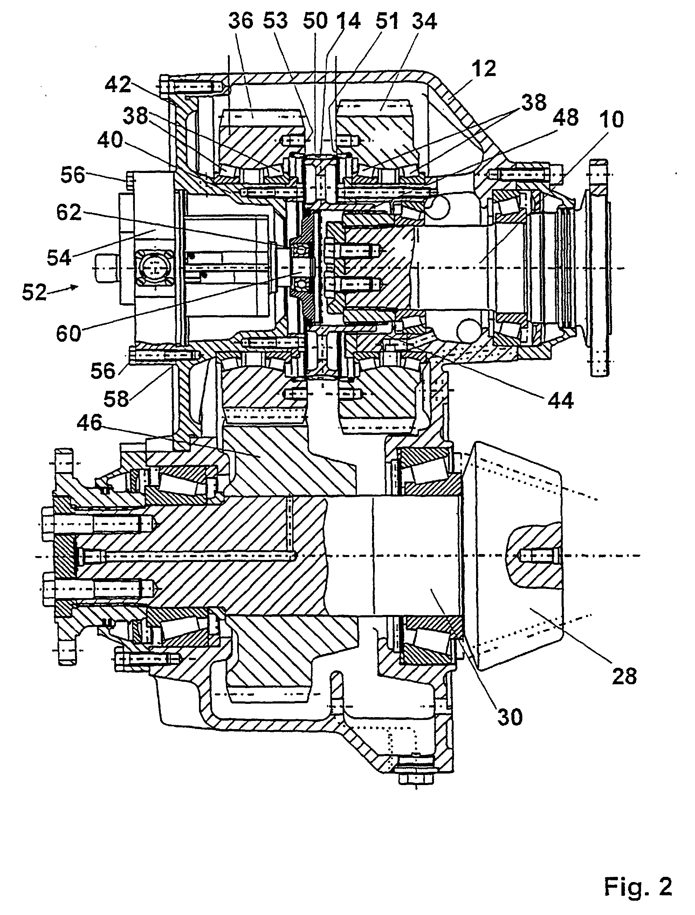

Das in Fig. 2 dargestellte erfindungsgemäße Wendegetriebe 8 weist ein erstes Eingangszahnrad 34 und ein zweites, koaxiales Eingangszahnrad 36 auf. Das zweite Eingangszahnrad 36 ist mittels Wälzlagern 38 drehbar auf einem Lagerstutzen 40 gelagert. Der Lagerstutzen 40 ist Teil eines Gehäusedeckels 42 des Wendegetriebegehäuses 12. Das erste Eingangszahnrad 34 ist auf einem Lagerstutzen 44 des Wendegetriebegehäuses 12 drehbar gelagert. Das zweite Eingangszahnrad 36 ist in ständigem Zahneingriff mit dem Abtriebsrad 46, das auf der Abtriebswelle 30 sitzt. Das Kegelrad 28 ragt in das in Fig. 2 nicht dargestellte Achsgetriebe hinein und ist dort mit dem Kegelrad 26 (Fig. 1) im Eingriff. Das erste Eingangszahnrad 34 ist über eine nicht dargestellte Zwischenwelle, die außerhalb der Zeichnungsebene liegt, ebenfalls in ständiger trieblicher Verbindung mit dem Abtriebsrad 46. Die zwischen den Eingangszahnrädern 34, 36 liegende Kupplungseinrichtung 14 ist mittels einer Formschlußverzahnung 48 drehfest, aber axial verschieblich, mit der in einen radial innerhalb des Lagerstutzens 44 liegenden Hohlraum mündenden Eingangswelle 10 verbunden. Sie weist eine Schaltmuffe mit einer Außenverzahnung 50 auf, die, je nach axialer Schaltstellung der Kupplungseinrichtung 14, in eine Innenverzahnung 51 des ersten Eingangszahnrads 34 oder in eine Innenverzahnung 53 des zweiten Eingangszahnrads 36 eingreift. In einer axialen Mittel-Schaltstellung sind beide Eingangszahnräder 34, 36 von der Kupplungseinrichtung 14 bzw. der Eingangswelle 10 entkoppelt, wodurch eine Neutralstellung gegeben ist.

Der Lagerstutzen 40, auf dessen radial äußerer Mantelfläche das zweite Eingangszahnrad 36 gelagert ist, weist radial innerhalb einen zentralen, längs ausgerichteten Hohlraum auf, in den von außen eine Schalteinrichtung 52 hineinragt. Der Bauraum, der in bekannten Wendegetrieben von einer Eingangswelle oder von einer Radnabe beansprucht wird, dient also bei der erfindungsgemäßen Anordnung wenigstens teilweise zur Aufnahme der Schalteinrichtung 52. Die Schalteinrichtung 52 weist ein Rückenteil 54 auf, das mit Schrauben 56 an einer Flanschfläche 58 des Wendegetriebegehäuses 12, 42 befestigt ist, so daß es das Gehäuse nach außen abschließt. Die beweglichen Teile der Schalteinrichtung 52 liegen, vor Umwelteinflüssen geschützt, innerhalb des Getriebegehäuses, wobei die Schalteinrichtung 52 dennoch von außen zugänglich ist. Anschlüsse für die hydraulische, pneumatische oder elektrische Ansteuerung der Schalteinrichtung sind in dem von außen zugänglichen Rückenteil 54 der Schalteinrichtung 52 angeordnet.

Die Schalteinrichtung 52 weist eine axial betätigbare Schaltstange 60 auf, mit der die Kupplungseinrichtung 14 über ein Kugellager 62 drehbar, aber axial fest, gekoppelt ist.

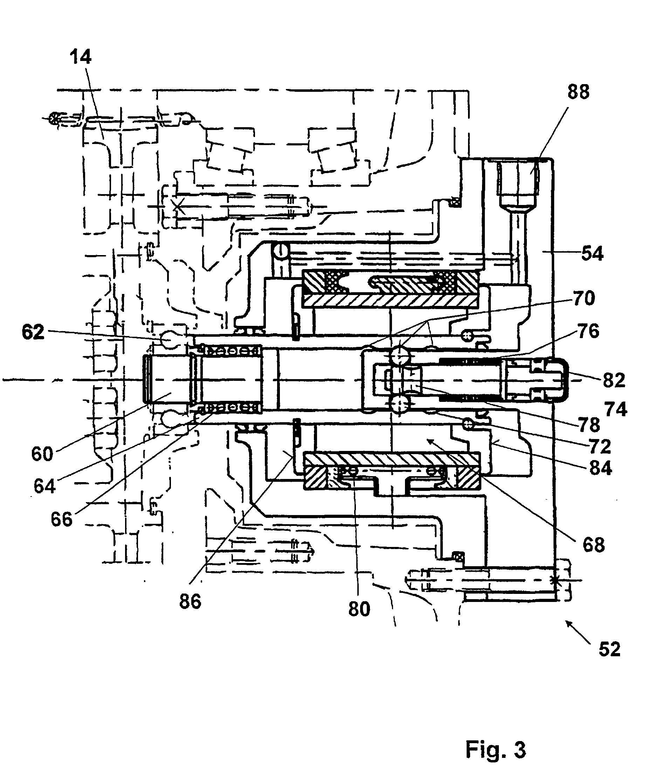

In der vergrößerten Schnitt-Darstellung einer Ausführungsform einer Schalteinrichtung gemäß Fig. 3 ist der Aufbau einer hydraulisch-pneumatischen Schalteinrichtung gezeigt. Die axiale Schaltbewegung wird von der Schaltstange 60 über das Kugellager 62 auf die Kupplungseinrichtung 14 übertragen. Im Kraftfluß zur Kupplungseinrichtung ist zwischen der Schaltstange 60 und einer hohlen Kolbenstange 64 eine in axialer Richtung wirkende vorgespannte Feder 66 angeordnet, die die im geschalteten Zustand auf die Kupplungseinrichtung wirkende Axialkraft begrenzt. Die Kupplungseinrichtung 14 ist in jeder der drei axialen Schaltstellungen (Vorwärts, Rückwärts, Neutral) durch einen Verriegelungsmechanismus 68 verriegelbar. Der Verriegelungsmechanismus weist an der Innenfläche der hohlen Kolbenstange 64 drei Ringnuten 70 zur Aufnahme von Kugeln 72 auf, welche in einem Fortsatz des Rückenteils 54 axial fixiert sind. Der Verriegelungskolben 74 zwingt die Kugeln 72 im verriegelten Zustand in die Ringnuten 70 der Kolbenstange. Wenn dieser Verriegelungskolben 74 gegen die Kraft einer Axialfeder 76 bewegt wird, erlaubt die Ringnut 78 des Verriegelungskolbens 74 ein radiales Zurückweichen der Kugeln 72 aus den Ringnuten 70, wodurch die Kolbenstange 64 und mit ihr die Kupplungseinrichtung axial entriegelt wird.

Die Mittel-Schaltstellung (Neutralstellung) der Kupplungseinrichtung 14 ist durch eine Axialfeder 80 federbelastet, so daß diese Schaltstellung selbsttätig eingelegt wird, wenn die Kolbenstange entriegelt ist und keine äußeren Kräfte anliegen. Bei Ausfall der pneumatischen oder hydraulischen Versorgung kann über den außen am Rückenteil 54 angebrachten Notentriegelungsknopf 82 bei dem erfindungsgemäßen Wendegetriebe hierdurch die Neutralstellung eingelegt werden.

Unter der Wirkung eines in bekannter Weise von einer nicht dargestellten Steuerungseinrichtung erzeugten hydraulischen oder pneumatischen Drucks auf die Kolbenflächen 84 oder 86 wird die Kolbenstange 64 und mit ihr die Kupplungseinrichtung 14 axial in die jeweils gewünschte Schaltstellung geschoben. Die Anschlüsse 88 für die Druckleitungen sind von außen zugänglich im Rückenteil 54 der Schalteinrichtung 52 angeordnet.

Insgesamt ist bei dem erfindungsgemäßen Wendegetriebe bei hoher Bauraumausnutzung die Schalteinrichtung gut gegen Umwelteinflüsse geschützt und dennoch gut von außen zugänglich.

### Bezugszeichen

- 2: Antriebsmotor
- 4: Schaltgetriebe
- 6: Gelenkwelle
- 8: Wendegetriebe
- 10: Eingangswelle
- 12: Wendegetriebegehäuse
- 14: Kupplungseinrichtung
- 16: Flansch
- 18: Trennfläche
- 20: Achsgetriebegehäuse
- 22: Fahrzeugachse
- 24: Achsgetriebe
- 26: Kegelrad
- 28: Kegelrad
- 30: Abtriebswelle
- 32: Gelenkwelle
- 34: Eingangszahnrad
- 36: Eingangszahnrad
- 38: Wälzlager
- 40: Lagerstutzen (erstes Eingangszahnrad)
- 42: Gehäusedeckel
- 44: Lagerstutzen
- 46: Abtriebsrad
- 48: Formschlußverzahnung
- 50: Außenverzahnung
- 51: Innenverzahnung
- 53: Innenverzahnung
- 52: Schalteinrichtung
- 54: Rückenteil
- 56: Schrauben
- 58: Flanschfläche
- 60: Schaltstange
- 62: Kugellager
- 64: Kolbenstange
- 66: Feder
- 68: Verriegelungsmechsnismus
- 70: Ringnuten
- 72: Kugeln
- 74: Verriegelungskolben
- 76: Axialfeder
- 78: Ringnut
- 80: Axialfeder
- 82: Notentriegelungsknopf
- 84: Kolbenfläche
- 86: Kolbenfläche
- 88: Anschluß

## Patentansprüche

1. Wendegetriebe (8) mit einem ersten Eingangszahnrad (34) und einem zweiten, zum ersten Eingangszahnrad (34) koaxialen Eingangszahnrad (36), wobei eine von einer Schalteinrichtung (52) betätigbare Kupplungseinrichtung (14) vorgesehen ist, durch die jeweils ein Eingangszahnrad (34,36) des Wendegetriebes (8) mit einer Eingangswelle (10) kuppelbar ist, **dadurch gekennzeichnet, daß** das zweite Eingangszahnrad (36) auf einem Lagerstutzen (40) des Wendegetriebegehäuses (12, 42) gelagert ist, der Lagerstutzen (40) im Bereich der Drehachse einen zentralen, längs ausgerichteten Hohlraum aufweist, die Schalteinrichtung (52) von außen in den Hohlraum des Lagerstutzens (40) hineinragt und ein Rückenteil (54) aufweist, der das Wendegetriebegehäuse (12, 42) nach außen abschließt.

2. Wendegetriebe (8) nach Anspruch 1, dadurch**gekennzeichnet**, daß das Wendegetriebegehäuse (12) einen Gehäusedeckel (42) aufweist und der Lagerstutzen (40) ein Teil des Gehäusedeckels (12) ist.

3. Wendegetriebe (8) nach Anspruch 2, **dadurch gekennzeichnet, daß** auch das erste Eingangszahnrad (34) auf einem Lagerstutzen (44) des Wendegetriebegehäuses (12) gelagert ist, der einen zentralen, längs ausgerichteten Hohlraum aufweist, und die Eingangswelle (10) in den Hohlraum dieses Lagerstutzens (44) mündet.

4. Wendegetriebe (8) nach einem der Ansprüche 1 bis 3, **dadurch gekennzeichnet, daß** die Kupplungseinrichtung (14) eine Schaltmuffe mit einer Außenverzahnung (50) aufweist, die in einer ersten axialen Schaltstellung in eine Innenverzahnung (51) des ersten Eingangszahnrads (34) eingreift, in einer zweiten axialen Mittel-Schaltstellung in keines der Eingangszahnräder eingreift und in einer dritten axialen Schaltstellung in eine Innenverzahnung (53) des zweiten Eingangszahnrads (36) eingreift.

5. Wendegetriebe (8) nach Anspruch 4, **dadurch gekennzeichnet, daß** jede der axialen Schaltstellungen durch einen Verriegelungsmechanismus (68) verriegelbar ist.

6. Wendegetriebe (8) nach Anspruch 4 oder 5, **dadurch gekennzeichnet, daß** die Mittel-Schaltstellung durch eine Feder (80) federbelastet ist, und die Schalteinrichtung (52) eine Notentriegelung (82) für den Verriegelungsmechanismus (68) aufweist, die in dem Rückenteil (54) angeordnet ist und von außen betätigbar ist.

7. Wendegetriebe (8) nach nach Anspruch 5 oder 6, **dadurch gekennzeichnet, daß** an der Schalteinrichtung innerhalb des Wendegetriebegehäuses (12) Sensoren zum berührungslosen Erkennen der Schaltstellung der Kupplungseinrichtung (14) und/oder des Verriegelungsmechanismus (68) vorgesehen sind.

8. Wendegetriebe (8) nach einem der Ansprüche 3 bis 7, **dadurch gekennzeichnet, daß** die Kupplungseinrichtung (14) auf der Seite des ersten Eingangszahnrads (34) drehfest, aber axial verschieblich, mit der in den Hohlraum des Lagerstutzens (44) mündenden Eingangswelle (10) verbunden ist und auf der anderen Seite drehbar, aber axial fest, an eine axial betätigbare Schaltstange (60) der Schalteinrichtung (52) gekoppelt ist.

9. Wendegetriebe (8) nach Anspruch 8, **dadurch gekennzeichnet , daß** eine in axialer Richtung wirkende vorgespannte Feder (66) vorgesehen ist, um die Axialkraft auf die Kupplungseinrichtung (14) zu begrenzen.

10. Wendegetriebe (8) nach einem der Ansprüche 1 bis 9, **dadurch gekennzeichnet, daß** die Schalteinrichtung (52) hydraulisch, pneumatisch oder elektrisch betätigbar ist, und hierfür vorgesehene Anschlüsse (88) in dem von außen zugänglichen Rückenteil (54) angeordnet sind.

11. Wendegetriebe (8) nach einem der vorherigen Ansprüche, **dadurch gekennzeichnet , daß** es als separate Baueinheit an einem Achsgetriebegehäuse (20) angeflanscht ist und auf seiner Abtriebswelle (30) ein in das Achsgetriebegehäuse (20) hineinragendes Kegelrad (28) des Achsgetriebes (24) trägt.

## Claims

1. Reversing gear (8) having a first input gearwheel (34) and a second input gearwheel (36) coaxial with the first input gearwheel (34), wherein a coupling device (14) actuable by a shift device (52) is provided for coupling, in each case, one input gearwheel (34, 36) of the reversing gear (8) to an input shaft (10), **characterized in that** the second input gearwheel (36) is supported on a support stud (40) of the reversing gear case (12, 42), the support stud (40) in the region of the axis of rotation has a central, longitudinally aligned cavity, the shift device (52) projects from outside into the cavity of the support stud (40) and has a back part (54), which closes off the reversing gear case (12, 42) in an outward direction.

2. Reversing gear (8) according to claim 1, **characterized in that** the reversing gear case (12) has a case cover (42) and the support stud (40) is a part of the case cover (12).

3. Reversing gear (8) according to claim 2, **characterized in that** the first input gearwheel (34) also is supported on a support stud (44) of the reversing gear case (12), which support stud has a central, longitudinally aligned cavity, and the input shaft (10) runs into the cavity of said support stud (44).

4. Reversing gear (8) according to one of claims 1 to 3, **characterized in that** the coupling device (14) comprises a shift sleeve having an external tooth system (50), which in a first axial shift position engages into an internal tooth system (51) of the first input gearwheel (34), in a second axial central shift position engages into neither of the input gearwheels and in a third axial shift position engages into an internal tooth system (53) of the second input gearwheel (36).

5. Reversing gear (8) according to claim 4, **characterized in that** each of the axial shift positions is lockable by means of a locking mechanism (68).

6. Reversing gear (8) according to claim 4 or 5, **characterized in that** the central shift position is spring-loaded by a spring (80), and the shift device (52) has an emergency unlocking device (82) for the locking mechanism (68), which device is disposed in the back part (54) and is actuable from the outside.

7. Reversing gear (8) according to claim 5 or 6, **characterized in that** sensors for contactlessly detecting the shift position of the coupling device (14) and/or of the locking mechanism (68) are provided on the shift device inside the reversing gear case (12).

8. Reversing gear (8) according to one of claims 3 to 7, **characterized in that** the coupling device (14) at the side of the first input gearwheel (34) is connected in a non-rotatable but axially displaceable manner to the input shaft (10), which runs into the cavity of the support stud (44), and at the other side is coupled in a rotatable but axially fixed manner to an axially actuable shift rod (60) of the shift device (52).

9. Reversing gear (8) according to claim 8, **characterized in that** an axially acting, biased spring (66) is provided for limiting the axial force upon the coupling device (14).

10. Reversing gear (8) according to one of claims 1 to 9, **characterized in that** the shift device (52) is actuable hydraulically, pneumatically or electrically, and connections (88) provided for said purpose are disposed in the externally accessible back part (54).

11. Reversing gear (8) according to one of the preceding claims, **characterized in that** it is flange-mounted as a separate unit on an axle gear case (20) and carries on its output shaft (30) a bevel wheel (28) of the axle gear (24), which bevel wheel projects into the axle gear case (20).

## Revendications

1. Boîte de renversement de marche (8) comportant une première roue dentée d'entrée (34) et une deuxième roue dentée d'entrée (36) coaxiale à la première roue dentée d'entrée (34), dans laquelle il est prévu un dispositif d'embrayage (14) pouvant être actionné par un dispositif de commande (52) et au moyen duquel chaque roue dentée d'entrée (34, 36) de la boîte de renversement de marche (8) peut être accouplée à un arbre d'entrée (10), **caractérisée en ce que** la deuxième roue dentée d'entrée (36) est tourillonnée sur un manchon de palier (40) du carter (12, 42) de la boîte de renversement de marche, le manchon de palier (40) comporte, dans la région de l'axe de rotation, une cavité centrale orientée longitudinalement, le dispositif de commande (52) pénètre de l'extérieur dans la cavité du manchon de palier (40) et comporte une partie dorsale (54) qui ferme à l'extérieur le carter (12, 42) de la boîte de renversement de marche.

2. Boîte de renversement de marche (8) selon la revendication 1, **caractérisée en ce que** le carter (12) de la boîte de renversement de marche comporte un couvercle de carter (42) et le manchon de palier (40) fait partie du couvercle (12) du carter.

3. Boîte de renversement de marche (8) selon la revendication 2, **caractérisée en ce que** la première roue dentée d'entrée (34) est elle aussi tourillonnée sur un manchon de palier (44) du carter (12) de la boîte de renversement de marche, qui comporte une cavité centrale orientée longitudinalement, et l'arbre d'entrée (10) débouche dans la cavité de ce manchon de palier (44).

4. Boîte de renversement de marche (8) selon l'une des revendications 1 à 3, **caractérisée en ce que** le dispositif d'embrayage (14) comporte un manchon de commande pourvu d'une denture extérieure (50) qui est en prise avec une denture intérieure (51) de la première roue dentée d'entrée (34) dans une première position axiale de commande, qui n'est en prise avec aucune des roues dentées d'entrée dans une deuxième position axiale, médiane, de commande et, qui est en prise avec une denture intérieure (53) de la deuxième roue dentée d'entrée (36) dans une troisième position axiale de commande.

5. Boîte de renversement de marche (8) selon la revendication 4, **caractérisée en ce que** chacune des positions axiales de commande peut être verrouillée par un mécanisme de verrouillage (68).

6. Boîte de renversement de marche (8) selon l'une des revendications 4 ou 5, **caractérisée en ce que** la position de commande médiane est rappelée élastiquement par un ressort (80), et le dispositif de commande (52) comporte un déverrouillage de secours (82) pour le mécanisme de verrouillage (68) qui est disposé dans la partie dorsale (54) et peut être actionné de l'extérieur.

7. Boîte de renversement de marche (8) selon l'une des revendications 5 ou 6, **caractérisée en ce que** des capteurs pour la reconnaissance sans contact physique de la position de commande du dispositif d'embrayage (14) et/ou du mécanisme de verrouillage (68) sont prévus sur le dispositif de commande, à l'intérieur du carter (12) de la boîte de renversement de marche.

8. Boîte de renversement de marche (8) selon l'une des revendications 3 à 7, **caractérisée en ce que**, sur le côté de la première roue dentée d'entrée (34), le dispositif d'embrayage (14) est relié, solidairement en rotation mais mobile en translation axiale, à l'arbre d'entrée (10) qui débouche dans la cavité du manchon de palier (44), tandis que, de l'autre côté, il est accouplé, libre en rotation mais immobilisé dans la direction axiale, à une tige de commande (60) du dispositif de commande (52) qui peut être actionnée axialement.

9. Boîte de renversement de marche (8) selon la revendication 8, **caractérisée en ce qu'**il est prévu un ressort précontraint (66) qui agit dans la direction axiale pour limiter la force axiale appliquée au dispositif d'embrayage (14).

10. Boîte de renversement de marche (8) selon l'une des revendications 1 à 9, **caractérisée en ce que** le dispositif de commande (52) peut être actionné par voie hydraulique, pneumatique ou électrique, et des raccords (88) prévus pour cela sont agencés dans la partie dorsale (54) qui est accessible de l'extérieur.

11. Boîte de renversement de marche (8) selon l'une des revendications précédentes, **caractérisée en ce qu'**elle est montée par flasque contre un carter (20) de la transmission d'essieu, sous la forme d'une unité de construction séparée et porte, sur son arbre de sortie (30), une roue conique (28) de la transmission d'essieu (24) qui est engagé dans le carter (20) de la transmission d'essieu.
